# EUROPEAN PATENT APPLICATION

(11) **EP 4 487 695 A1**
(43) Date of publication of application: **08.01.2025**
(21) Application number: 23759819.8
(22) Date of filing: 15.02.2023
(51) Int. Cl.: A23L 5/00, A23L 2/00, A23L 2/02, A23L 2/38, A23L 2/42, A23L 2/52, A23L 2/56, A23L 23/00

(54) **PACKAGED LIQUID FOOD**

(30) Priority: 28.02.2022 JP 2022029377
(71) Applicant: Suntory Holdings Limited, Osaka-shi, Osaka 530-8203 (JP)
(72) Inventor: IKAWA, Yukie, Kawasaki-shi, Kanagawa 211-0067 (JP); TAKAHASHI, Amane, Kawasaki-shi, Kanagawa 211-0067 (JP); ASANO, Yu, Kawasaki-shi, Kanagawa 211-0067 (JP)
(74) Representative: Vossius & Partner Patentanwälte Rechtsanwälte mbB
(86) International application number: PCT/JP2023/005239
(87) International publication number: WO 2023/162818

(57) **Abstract**

An object of the present invention is to provide a liquid food product packaged in a container in which deterioration of a functional ingredient is suppressed, the liquid food product being palatable and easy to continually ingest in a convenient manner. The present invention provides a multi-liquid type liquid food product in which (a) a liquid composition including a functional ingredient and (b) a liquid composition different from the liquid composition (a) are individually packaged.

## Description

### TECHNICAL FIELD

The present invention relates to a liquid food product packaged in a container, the liquid food product containing a functional ingredient.

### BACKGROUND ART

With increase in health consciousness, the market for supplements and health food products has expanded year by year. The most important consideration for supplements and health food products is what kind of functional ingredients are contained therein and how much amount of the functional ingredient is contained therein. However, it is also very important that the supplements and health food products can be ingested tastefully and easily, since it is necessary to continually ingest the supplements or health food products in order to feel their effect. Many conventional supplements are in the form of tablets and capsules, and such supplements can be easily ingested but lack palatability. Examples of health food products include beverages, gummy candies, seasonings, and concentrated beverage-type products. However, beverages and gummy candies always have the same taste and form and thus cause boredom, and continual ingestion may be difficult. In addition, the problem with liquid health food products containing a functional ingredient is that it is difficult to maintain stability of the functional ingredient because hydrolysis proceeds.

Therefore, various methods for stabilizing functional ingredients of liquid health food products have been proposed. Examples thereof include a functional food or beverage containing a sorghum nervosum extract in order to prevent deterioration of lutein, which is known to have an effect of maintaining ocular health (PTL 1), a composition containing a hibiscus extract in order to suppress protease activity in royal jelly (PTL 2), and a beverage in a container, a transparent portion of the container being covered with a light-shielding thin film material to suppress photodegradation of a functional ingredient (PTL 3).

### CITATION LIST

### PATENT LITERATURE

PTL 1: Japanese Patent Laid-Open No. 2020-043826
PTL 2: Japanese Patent Laid-Open No. 2003-000163
PTL 3: Japanese Patent Laid-Open No. 2019-201569

### SUMMARY OF INVENTION

### TECHNICAL PROBLEM

It is important for a food product containing a functional ingredient to maintain stability of the contained functional ingredient and to be palatable and easy to continually ingest in a convenient manner in order to maximize the effect thereof.

In view of such circumstances, an object of the present invention is to provide a liquid food product packaged in a container in which deterioration of a functional ingredient is suppressed, the liquid food product being palatable and easy to continually ingest in a convenient manner.

### SOLUTION TO PROBLEM

As a result of intensive studies on the above object, the present inventors have found that an excellent liquid food product packaged in a container can be provided by separately designing and packaging a functional ingredient under stable optimum conditions from an ingredient that provides a flavor of the food product, and have thus completed the present invention.

The present invention encompasses the following aspects but is not limited thereto.
[1] A liquid food product packaged in a container, wherein (a) a liquid composition including a functional ingredient and (b) a liquid composition different from the liquid composition (a) are individually packaged.
[2] The food product according to [1], wherein the liquid composition (a) is not heat-sterilized.
[3] The food product according to [1] or [2], wherein the liquid composition (b) contains a thickening agent.
[4] The food product according to any of [1] to [3], wherein the liquid composition (b) has viscosity of 5 to 400 mPa·s.
[5] The food product according to any of [1] to [4], wherein the container includes at least two or more liquid chambers for holding the liquid compositions (a) and (b).
[6] The food product according to any of [1] to [5], wherein the container allows the liquid compositions (a) and (b) to be simultaneously released from the container.
[7] The food product according to any of [1] to [6], wherein the liquid composition (a) includes 40% by weight or more of an oil.
[8] The food product according to any of [1] to [7], wherein the functional ingredient is lipid-soluble, and the liquid composition (a) includes 40% by weight or more of an oil.
[9] The food product according to any of [1] to [8], wherein the liquid composition (a) includes 75% by weight or more of an oil.
[10] The food product according to any of [1] to [9], wherein the liquid composition (b) includes a flavoring agent and/or a fruit juice.
[11] The food product according to any of [1] to [10], wherein the food product is a beverage.
[12] The food product according to any of [1] to [11], wherein the food product is a concentrated beverage to be diluted before drunk.
[13] The food product according to any of [1] to [12], wherein the food product is a single-use product.
[14] A method for producing the liquid food product packaged in a container according to any of [1] to [13], the method including the step of filling the liquid composition (a) and the liquid composition (b) in different liquid chambers, respectively.
[15] The method according to [14], wherein the liquid composition (a) is not heat-sterilized or is heat-sterilized at a temperature of 100°C or lower.

### ADVANTAGEOUS EFFECTS OF INVENTION

According to the present invention, a liquid composition including a functional ingredient can be designed so as to be under stable optimum conditions, and therefore, stability of the functional ingredient can be easily maintained. In addition, since an optimum formulation can be adopted also for an ingredient providing a flavor of a food product, a change in physical properties and a change in flavor of the flavor ingredient can be effectively suppressed, and the effect of the functional ingredient can be fully exhibited through continual ingestion.

### DESCRIPTION OF EMBODIMENTS

The present invention relates to a liquid food product including multiple liquid compositions packaged in a container, the liquid food product including (a) a liquid composition including a functional ingredient and (b) a liquid composition different from the liquid composition (a).

The liquid food product packaged in a container in the present invention includes multiple liquid compositions, and the liquid composition (a) including a functional ingredient and the liquid composition (b) different from the liquid composition (a) are individually packaged in different liquid chambers so that the liquid composition (a) and the liquid composition (b) do not mix with each other. In a preferred embodiment, the individually packaged multiple liquid compositions are housed in one package. Many functional ingredients are unstable to acids, heat, and others in general; however, in a case of a multi-liquid type packaged food product as in the present invention, the formulation of a liquid composition including a functional ingredient can be designed so as to be under optimum conditions according to the characteristics of the functional ingredient, and thus, deterioration of the functional ingredient is suppressed, thereby easily maximizing the effects of the functional ingredient.

For example, in a case where a functional ingredient and another ingredient are mixed to provide a single-liquid type packaged food product also containing moisture, the packaged food product needs sterilization for the purpose of long storage, and the functional ingredient may deteriorate due to heat for sterilization. However, in the case of a multi-liquid type packaged food product as in the present invention, an oil can be used as a base material of a liquid composition containing a functional ingredient, for example, to prepare the composition such that the functional ingredient does not come into contact with moisture, and sterilization can thus be carried out under relaxed conditions for the functional ingredient, or otherwise preferably be unnecessary. Thus, it is possible to suppress a change in flavor and deterioration of the ingredient due to heat, and hydrolysis due to the presence of moisture, for example.

In addition, in the case of a multi-liquid type packaged food product as in the present invention, the functional ingredient is prevented from reacting with another ingredient to cause change in its physical properties, for example. Examples of the change in physical properties include: deposition generated when iron and polyphenol in a fruit juice or anthocyanin and a hydroxide ion are reacted to cause a change in physical properties; and gelatinization due to reaction between calcium and pectin. In a case of such a combination that is likely to cause a change in physical properties when existing in the same chamber, a liquid composition including a functional ingredient and another liquid composition including an ingredient that is likely to react with the functional ingredient can be separately prepared and individually packaged in a container, so that the ingredients, physical properties, and flavor can be stably maintained in each liquid composition.

In the liquid food product packaged in a container according to the present invention, at least one liquid composition includes a functional ingredient. In the present invention, the term "functional ingredient" means an ingredient that is absorbed into a living body to provide various nutritional or health benefits. Examples of such a functional ingredient can include ingredients used as active ingredients in special use foods, foods with health claims (foods for specified health use and foods with nutrient function claims), functional foods, nutritional supplements, health supplements, fortified foods, nutritionally-adjusted foods, and supplements. In one embodiment, when the functional ingredient is included in the food product, the name of the ingredient and the content per unit of food may be labelled as a nutrition facts label, or the name of the ingredient and the content per daily adequate intake may be labelled as a functionally relevant ingredient. Therefore, the functional ingredient may be included as an ingredient such as a fruit juice in a food product, but may be separately included in the form of a preparation or the like. Ingredients added as food additives that are used for application other than nutrient enhancers do not correspond to the functional ingredient in the present invention, and examples thereof include, but not limited to, food additives added during production process of food products or used for the purpose of processing or preservation of food products, such as an acidulant and a colorant.

The functional ingredient according to the present invention may be lipid-soluble or water-soluble, and a lipid-soluble functional ingredient and a water-soluble functional ingredient may be used in combination.

Examples of the lipid-soluble functional ingredient include coenzyme Q10, curcumin, tocotrienol, testosterone, menthol, a fatty acid, a carotenoid, resveratrol, a lipid-soluble vitamin, sesamin, α-lipoic acid, saw palmetto extract, Saint John's wort (hypericin), royal jelly (decenoic acid), hesperidin, nobiletin, quercetin, kaempferol, myricitrin, catechin, daidzein, glycitein, genistein, myricetin, stilbene, and combinations of two or more thereof. Examples of the fatty acid include highly unsaturated fatty acids (PUFAs) such as docosahexaenoic acid (DHA) and eicosapentaenoic acid (EPA) as well as oleic acid, lauric acid, myristic acid, linoleic acid, and palmitic acid. Examples of the carotenoid include α-carotene, β-carotene, lutein, lycopene, astaxanthin, zeaxanthin, cryptoxanthin, fucoxanthin, and xanthophyll, and examples of the lipid-soluble vitamin include vitamin A, vitamin D, vitamin K, and vitamin E.

Examples of the water-soluble functional ingredient include anthocyanin, glucosamine, collagen, a water-soluble vitamins (vitamin B group, vitamin C, and the like), minerals, amino acids, proteins, peptides, caffeine, flavonoids, polyphenols, and combinations of two or more thereof. Examples of the peptides include carnosine, anserine, and a cyclic dipeptide. Functional ingredients insoluble in water can also be used, and examples thereof can include iron, calcium, lactic acid bacteria, bifidobacteria, and combinations of two or more thereof.

The content of the functional ingredient in the liquid composition including the functional ingredient is not particularly limited. The content can be, for example, 0.001% to 100% by weight, preferably 0.01% to 67% by weight, more preferably 0.1% to 35% by weight, and may be 1% to 20% by weight based on the total amount of the liquid composition including the functional ingredient. The content of the functional ingredient in the liquid composition may be, for example, 3% by weight or more, 5% by weight or more, and 10% by weight or more, and may be 99% by weight or less, 95% by weight or less, and 90% by weight or less, depending on the kind of the functional ingredient.

When a fatty acid is contained as the lipid-soluble functional ingredient, the content of the fatty acid alone may be, for example, 0.05% by mass or more, 0.1% by mass or more, 0.2% by mass or more, 0.3% by mass or more, 0.5% by mass or more, 1% by mass or more, and 3% by mass or more, and may be 60% by mass or less, 65% by mass or less, 50% by mass or less, and 20% by mass or less.

When a lipid-soluble vitamin is contained as the lipid-soluble functional ingredient, the content of the lipid-soluble vitamin alone may be, for example, 0.1% by mass or more, 0.5% by mass or more, 0.8% by mass or more, 1.0% by mass or more, 1.3% by mass or more, and 3% by mass or more, and may be 60% by mass or less, 65% by mass or less, 50% by mass or less, and 20% by mass or less.

When sesamin is contained as the lipid-soluble functional ingredient, the content of sesamin alone may be, for example, 0.05% by mass or more, 0.1% by mass or more, 0.2% by mass or more, 0.3% by mass or more, 0.5% by mass or more, 1% by mass or more, and 3% by mass or more, and may be 60% by mass or less, 65% by mass or less, 50% by mass or less, and 20% by mass or less.

In the present invention, the base material of the liquid composition including the functional ingredient is not particularly limited, and a liquid including an oil and a liquid including water can be used without limitations. The amount of the base material is not particularly limited, and can be 40% by weight or more and may be 45% by weight or more, 50% by weight or more, 55% by weight or more, 60% by weight or more, 65% by weight or more, 70% by weight or more, 75% by weight or more, 80% by weight or more, 85% by weight or more, 90% by weight or more, or 92% by weight or more based on the liquid composition including the functional ingredient, in view of allowing the functional ingredient to be uniformly dispersed and completely taken out without remaining on a wall surface of the container.

In the present invention, when an oil is used as the base material of the liquid composition including the functional ingredient, edible oils can be used as the base material oil without limitations. For example, a vegetable oil can be suitably used, including safflower oil, palm oil, coconut oil, rapeseed oil, cottonseed oil, corn oil, sunflower seed oil, soybean oil, and wheat germ oil, and a processed oil such as MCT oil may also be used. In one embodiment, preferable types of the oil are safflower oil, sunflower seed oil, and MCT oil, which are serving as a base oil that is tasteless, odorless, and hardly oxidized and thus does not affect the palatability of the liquid composition. It is difficult to take out the oil from the container if the oil is solidified during storage at a low temperature, and accordingly, in another embodiment, preferred is an oil having a medium or shorter chain as a fatty acid, which hardly solidifies; or alternatively, when the fatty acid is a long chain, an unsaturated fatty acid (oleic acid, linoleic acid, or the like) preferably accounts for 80% or more and may account for 82% or more, 84% or more, 86% or more, 88% or more, and 90% or more. An embodiment in which an oil is used as the base material of the liquid composition including the functional ingredient is preferable for the following reason: in that embodiment, water activity is lowered so that sterilization is not required, and it is thus possible to suppress deterioration of the functional ingredient and change in flavor due to heat, and also hydrolysis due to the presence of moisture, for example. When the base material is an oil, the lipid-soluble functional ingredient can be directly mixed therewith. When the functional ingredient is insoluble in the oil used as the base material, and is, for example, a water-soluble functional ingredient, the oil can be thickened to thereby uniformly disperse the functional ingredient. In addition, beeswax, silicon dioxide, or glycerin fatty acid ester, for example, may be added to the liquid composition as an additive that functions for thickening, dispersing, and emulsifying.

The liquid composition including the functional ingredient may include an emulsifier, a thickening agent, an antioxidant, a pH adjuster, a flavoring agent, an excipient, and others, in addition to the functional ingredient. When the base material is not an oil, a large amount of saccharides or the like can be added to increase the brix value (Bx) to lower water activity, thereby eliminating the need for sterilization. The Brix value of the liquid composition including the functional ingredient in this case may be, for example, 5 to 100, 10 to 50, or 60 to 90.

The liquid composition according to the present invention preferably has a viscosity suitable for stable dispersion of the functional ingredient and further for pouring on food or mixing with a beverage after removal from the container. The viscosity of the liquid composition according to the present invention is not particularly limited and may be appropriately adjusted depending on the application. The viscosity may fall within the range of, for example, 1 to 15,000 mPa·s, preferably 2 to 450 mPa·s or 2 to 400 mPa·s, more preferably 4 to 400 mPa-s or 4 to 350 mPa·s, and still more preferably 5 to 350 mPa·s or 5 to 300 mPa·s. The viscosity of the liquid composition according to the present invention can be, for example, 1 mPa·s or more, 2 mPa·s or more, 4 mPa·s or more, 5 mPa·s or more, 10 mPa-s or more, 15 mPa·s or more, 20 mPa·s or more, 25 mPa·s or more, 30 mPa·s or more, 35 mPa·s or more, 40 mPa·s or more, 45 mPa·s or more, 50 mPa·s or more, 55 mPa·s or more, and 60 mPa·s or more. If the viscosity is too low, it may be impossible to provide adequate thickness for pouring the liquid compositions according to the present invention on food or mixing the liquid compositions with a beverage after removal from the container, depending on the application. The viscosity of the liquid composition can be, for example, 15000 mPa·s or less, 14000 mPa·s or less, 13000 mPa·s or less, 12000 mPa·s or less, 11000 mPa·s or less, 10000 mPa.s or less, 8000 mPa-s or less, 5000 mPa·s or less, 3000 mPa·s or less, 2000 mPa·s or less, 1000 mPa·s or less, 500 mPa·s or less, 450 mPa·s or less, 400 mPa·s or less, 350 mPa·s or less, 300 mPa·s or less, or 250 mPa·s or less. If the viscosity is too high, a satisfactory texture or flavor may not be obtained, or the liquid composition may remain on the bottom or a wall surface of the container, making it difficult to completely use the composition depending on the application. The viscosities of the multiple liquid compositions may be the same or different from one another. The viscosity of one liquid composition may be less than 150 mPa·s, and the viscosity of the other liquid composition may be 150 mPa·s or more, for example. In the present invention, the viscosity of the liquid composition can be measured at 21°C with an SV type (turning fork vibration type) viscometer. The liquid composition according to the present invention may be a Newtonian fluid or a non-Newtonian fluid.

The viscosity of the liquid composition may be appropriately adjusted by a known method, and a viscosity modifier such as a thickening agent or a surfactant can be used. Examples of the thickening agent include pectin such as LM pectin and HM pectin, carrageenan such as κ-carrageenan, λ-carrageenan, and 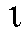 -carrageenan, guar gum, xanthan gum, tamarind gum, propylene glycol, carboxymethyl cellulose (CMC), locust bean gum, mannan, inulin, gum arabic, arabinogalactan, gum ghatti, gum karaya, guar gum, psyllium seed gum, gellan gum, tamarind seed gum, psyllium seed gum, alginic acid, sodium alginate, pregelatinized starch, hydroxypropyl starch, and phosphate-crosslinked starch. In the case of preparing a beverage by mixing the liquid compositions according to the present invention with a liquid such as water, milk, or alcohol, a beverage having optimum viscosity may be prepared by adjusting the viscosity and ingredients of the liquid compositions in consideration of a diluent.

The liquid composition according to the present invention may contain an ingredient that imparts a flavor to food. In a preferred embodiment, another liquid composition that is not the liquid composition including the functional ingredient contains, for example, a flavoring agent, a fruit juice, or a roasted plant extract. As the flavoring agent, a known flavoring agent can be used without limitations (see, for example, food flavoring agents in JPO "Collection of Well-known Prior Arts (flavoring agent) part II"). Specifically, examples of the flavoring agent include citrus-based flavoring agents such as orange flavor, lemon flavor, lime flavor, grapefruit flavor, Citrus junos flavor, and Citrus sudachi flavor, a berry-based flavoring agent such as strawberry flavor, raspberry flavor, and blueberry flavor, a tropical fruit-based flavoring agent such as mango flavor, papaya flavor, guava flavor, passion fruit flavor, and litchee flavor, and a fruit flavoring agent such as apple flavor, grape flavor, pineapple flavor, banana flavor, peach flavor, melon flavor, apricot flavor, Prunus mume flavor, and cherry flavor, a tea/coffee-based flavoring agent such as green tea flavor, oolong tea flavor, black tea flavor, and coffee flavor, a cocoa flavoring agent, a milk-based flavoring agent such as milk flavor, cream flavor, butter flavor, cheese flavor, and yogurt flavor, meat-based flavoring agent such as beef flavor, pork flavor, and chicken flavor, a herb/spice flavoring agent such as asafetida flavor, ajowan flavor, anise flavor, angelica flavor, fennel flavor, allspice flavor, cinnamon flavor, cassia flavor, chamomile flavor, mustard flavor, cardamom flavor, caraway flavor, cummin flavor, clove flavor, pepper flavor, coriander flavor, sassafras flavor, savory flavor, Zanthoxylum piperitum flavor, Japanese basil flavor, juniper berry flavor, ginger flavor, star anise flavor, horseradish flavor, sage flavor, thyme flavor, taragon flavor, dill flavor, hot pepper flavor, jujube flavor, nutmeg flavor, basil flavor, parsley flavor, marjoram flavor, rosemary flavor, laurel flavor, and wasabi flavor, a mint-based flavoring agent such as peppermint flavor, spearmint flavor, and Japanese mint flavor, a vanilla-based flavoring agent, a nut-based flavoring agent such as almond flavor, cashew nut flavor, peanut flavor, hazelnut flavor, walnut flavor, chestnut flavor, macadamia nut flavor, pecan nut flavor, pistachio flavor, Brazil nut flavor, and coconut flavor, a western liquor-based flavoring agent such as wine flavor, whisky flavor, brandy flavor, rum flavor, gin flavor, and liqueur flavor, cereal-based flavoring agent such as sesame flavor, corn flavor, potato flavor, sweet potato flavor, rice flavor, and bread flavor, and a sugar-based flavoring agent such as honey flavor, maple syrup flavor, sugar flavor, brown sugar flavor, and molasses flavor.

Examples of the fruit juice include citrus-based fruit juices such as orange, lemon, lime, grapefruit, Citrus junos, and Citrus sudachi; berry-based fruit juices such as strawberry, raspberry, and blueberry; tropical fruit-based fruit juices such as mango, papaya, guava, passion fruit, and litchee; and fruit juices of apple, grape, pineapple, banana, peach, melon, apricot, Prunus mume, and cherry.

The roasted plant extract means a product obtained by subjecting a raw material plant to a roasting treatment and an extraction treatment. Examples of plants used as a raw material for a roasted plant (roasted product from a plant) include tea leaves belonging to Camellia sinensis such as green tea, black tea, oolong tea, and pu-erh tea; cereals belonging to Poaceae, Fabaceae, and Polygonaceae such as Coix lacryma-jobi var. ma-yuen, brown rice, barley, and buckwheat; and coffee beans belonging to Rubiaceae coffea. A single kind of the roasted plant extract may be included, or a plurality of roasted plant extracts may be included.

The liquid composition according to the present invention may include ingredients commonly used in foods and beverages, such as a sweetener, an acidulant, a pH adjuster, a preservative, and a colorant.

The pH value of the liquid composition according to the present invention is not particularly limited, and in a case of an aqueous solution, the pH value can be, for example, 1.0 to 7.0, preferably 2.0 to 5.0 or 2.5 to 4.0. The method of adjusting the pH value is not particularly limited, and a known acidulant and a known pH adjuster can be used, for example. The pH value of the liquid composition including the functional ingredient and the pH value of another liquid composition can each be optimized.

### Liquid food product packaged in container

The food product according to the present invention is a multi-liquid type packaged liquid food product. In the present invention, a container is used that is capable of individually packaging a liquid composition including a functional ingredient and another liquid composition so as not to mix with each other. In the present invention, any container may be used as long as multiple liquid compositions can be individually packaged, and it is preferable to use a container including two or more chambers, for example. The number of the chambers is not particularly limited as long as there are two or more chambers, and the number of the chambers is preferably four or less, more preferably three or less, and still more preferably two. The volume of each chamber is not particularly limited, and can be, for example, 1 to 50 ml, preferably 1.5 to 40 ml, and more preferably 2 to 20 ml. The volumes of the respective chambers may be the same or different. When there are two chambers, the volume ratio between the liquids held in the respective chambers is not limited and is, for example, 1:1 to 1:10 (v:v), preferably 1:1.5 to 1:7, and more preferably 1:2 to 1:5, in view of ease of mixing when in use. In another embodiment, when there are two chambers, the ratio (v:v) of the volume of the liquid composition including the functional ingredient to the volume of the other liquid composition is, for example, 1:1 to 1:10, preferably 1:1.5 to 1:7, more preferably 1:1.5 to 1:5, and still more preferably 1:1.5 to 1:3.

The liquid food product packaged in a container of the present invention is a single-use product in a preferred embodiment, and is eaten after mixing two or more liquid compositions filled in the food chambers. The liquid food product packaged in a container can be eaten alone; however, in a preferred embodiment, the liquid food product packaged in a container according to the present invention is ingested after two or more liquid compositions filled in the chambers are poured on a food, and in this case, the liquid compositions filled in the chambers typically compose an edible sauce. The food on which the liquid food product packaged in a container is poured is not particularly limited as long as it is a food, and examples thereof include yogurt, ice cream, shaved ice, pudding, jelly, pancake, crepe, rice cake, cracker, cheese, bread, salad, marinated food, and pasta.

In another preferred embodiment, the liquid food product packaged in a container according to the present invention is a concentrated beverage (drink concentrate) that is drunk after two or more liquid compositions filled in the chambers are mixed with another liquid. The diluent for diluting the concentrated beverage is not particularly limited, and examples of the diluent that can be suitably used include water and also carbonated water, an alcoholic (ethanol) aqueous solution, milk such as bovine milk, and soybean milk. In particular, since bovine milk abundantly contains nutrients and has the effect of making an unpleasant taste derived from the functional ingredient mild to provide a beverage that can be drunk smoothly. Accordingly, a more palatable and healthy beverage can be provided through dilution with bovine milk. When the liquid food product packaged in a container according to the present invention is diluted with the diluent, the dilution factor is not particularly limited, and is preferably 2.0 to 20.0, more preferably 3.0 to 15.0, and still more preferably 4.0 to 12.0. In the present invention, the lower limit of the dilution factor is not particularly limited, and the dilution factor can be, for example, 2.0 or more, 3.0 or more, 4.0 or more, or 5.0 or more. For the upper limit, the dilution factor can be, for example, 20.0 or less, 18.0 or less, 15.0 or less, or 13.0 or less. When a beverage is prepared from the liquid food product packaged in a container according to the present invention, the beverage may be an alcoholic beverage or a non-alcoholic beverage. The temperature of the diluent is not particularly limited, and the diluent may be refrigerated or heated.

In the present invention, an ingredient can be incorporated into the liquid composition taking the diluent into concideration, so that the properties of the resulting beverage can be regulated when the liquid food product and the diluent are mixed together. For example, LM pectin forms a gel with a divalent metal ion such as calcium, and accordingly, in a case where LM pectin is included into in a liquid composition, an increased viscosity can be obtained when the liquid composition is diluted with milk, thus providing texture like a smoothie. Also, HM pectin is gelated in the presence of an acid or sugar, and accordingly, when HM pectin is included in a liquid composition, the viscosity of the beverage can be changed by mixing the liquid composition with a liquid including an acid or sugar. The viscosity of the beverage prepared by diluting the liquid food product packaged in a container according to the present invention with the diluent is not particularly limited, and the beverage may be a low-viscosity beverage or may be a high-viscosity beverage such as a smoothie. The viscosity of the beverage to be drunk may be, for example, 0.5 to 100 mPa·s or 1 to 60 mPa·s, and may be 0.5 to 10 mPa·s or 20 to 60 mPa·s depending on the type of the beverage. For the lower limit, the viscosity of the beverage to be drunk can be, for example, 0.5 mPa·s or more, 1.0 mPa·s or more, 2.0 mPa·s or more, 3.0 mPa·s or more, 4.0 mPa·s or more, 5.0 mPa·s or more, 7.0 mPa·s or more, 10.0 mPa·s or more, 15.0 mPa·s or more, and 18.0 mPa·s or more, and for the upper limit, the viscosity can be 100 mPa·s or less, 70 mPa-s or less, 50 mPa·s or less, and 30 mPa·s or less.

The material, the shape, and others of the container used in the present invention are not particularly limited as long as multiple liquid compositions can be individually packaged. The material of the container used can be any materials commonly used for beverage containers, including metal containers such as aluminum cans and steel cans, resin containers such as PET bottles, glass bottles, and paper containers. In a preferred embodiment, the container according to the present invention is made of a resin, and examples thereof include a small-volume portion package (DISPEN PAK JAPAN CO., INC.), a two-compartment CosmoPack (KANAE CS PACK Co., Ltd.), a two-compartment package for extemporaneous preparation (Joy-pack blister type, KANAE CS PACK Co., Ltd.), and a package including small bags with isolation seal to be broken when use (Komack Co., Ltd.). In a preferred embodiment, the liquid food product packaged in a container according to the present invention can simultaneously release multiple liquid compositions in one action. Although the way to simultaneously release multiple liquid compositions in one action is not limited, examples thereof include releasing at once multiple liquid compositions from respective containers by one opening operation, and the shape of the container is not particularly limited as long as such an operation is possible.

When the container used in the present invention can simultaneously release, from the container, (a) the liquid composition including the functional ingredient and (b) the liquid composition different from the liquid composition (a), it is preferable that respective opening portions of the chambers be close to each other. The distance between the multiple opening portions is more preferably within 2 cm, and may be within 1.5 cm, within 1 cm, and within 0.5 cm, and the opening portions may be brought into close contact with each other at the time of releasing the liquid compositions. However, the configuration is not limited the above.

In a case of a liquid composition requiring heat sterilization, the container may be filled with the liquid composition that has undergone heat sterilization, or heat sterilization may be carried out after filling the container with the liquid composition, to provide the liquid food product packaged in a container according to the present invention. Only a part of the multiple liquid compositions may be heat-sterilized. In an embodiment of the present invention, aseptic filling may be performed at a low temperature, for example. Conditions during heat sterilization are not particularly limited, and for example, a treatment defined in the Food Sanitation Act may be performed. Specifically, the treatment can be performed at 60°C to 150°C, preferably 90°C to 150°C, and more preferably 110°C to 150°C, for 1 second to 60 minutes and preferably 1 second to 30 minutes. In a case of a canned beverage, retort sterilization (for example, heat sterilization at 121°C for 7 minutes while appropriately pressurizing the canned beverage) may be performed, and in a case of a resin container, UHT sterilization (for example, the beverage composition is held at 120°C to 150°C for 1 second to a few tens of seconds) may be performed. Hot pack or membrane sterilization, for example, may also be used as necessary. For example, in the case of retort sterilization, the treatment can be performed at 110°C to 130°C for about 10 to 30 minutes and preferably at 120°C to 125°C for about 10 to 20 minutes, and in the case of UHT sterilization, the treatment can be performed at 120°C to 150°C for about 1 to 120 seconds and preferably at 130°C to 145°C for about 30 to 120 seconds. In order to prevent unintended mixing and contamination prior to filling, the sterilization step in producing the food product packaged in a container of the present invention is preferably performed separately for each of the liquid compositions to be filled into the respective chambers, whereby deterioration of the functional ingredient and flavor can be minimized until the filling step. For example, when the liquid composition includes an oil as the base material, or when the liquid composition includes water as the base material but has a high Brix value, the sterilization conditions can be relaxed or the liquid composition may not be heated, because the water activity in those cases is low.

The liquid food product packaged in a container of the present invention can be produced by production process including the step of preparing two or more liquid compositions, and the step of filling the prepared two or more liquid compositions in different chambers, respectively, for example. The order of the steps may be interchanged, and an additional step may be added, as appropriate. For example, the sterilization step may be provided, and the step of removing residues through filtration may be included.

In the liquid food product packaged in a container according to the present invention, the number of the liquid compositions filled is at least two, and the formulations thereof are different from one another. The liquid composition according to the present invention refers to a liquid composition prepared for edible purpose. Known mixing devices such as a paddle mixer, a homo mixer, and, if needed, a high-pressure homo mixer can be used without limitations in preparing the liquid composition, for example.

### EXAMPLES

Hereinafter, the present invention will be described in detail by way of specific examples, but the present invention is not limited to the following examples. Herein, concentrations and the like are on a mass (weight) basis, and the numerical ranges are described as including the endpoints thereof, unless otherwise described.

### Production Example 1: smoothie (banana flavored)

Liquid A and Liquid B were prepared according to the formulations shown in the following table. Liquid A was prepared by mixing a functional ingredient (DHA) with other ingredients so that the total volume thereof became 1 L. DHA is a kind of highly unsaturated fatty acid and has been reported to have the anticoagulant effect and the effect of reducing neutral fat. Liquid B was prepared by firstly adding sugar and a thickening agent (LM pectin) to water, heating and stirring the resultant at 80°C for 10 minutes, and subsequently adding the rest of ingredients so that the total volume thereof became 1 L. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of bovine milk was added thereto, followed by stirring to prepare a smoothie-like beverage (SV viscosity: about 5 mPa·s). DHA is lipid-soluble and is easily oxidized; however, when DHA was incorporated into a two liquid type packaged food product as in the present invention, it was possible to obtain a palatable beverage therefrom while suppressing deterioration of the functional ingredient. The SV viscosity was measured at 21°C using a viscometer (SV-10, manufactured by A&D Company, Limited), and also in the following production examples, the viscosity was measured in the same manner.

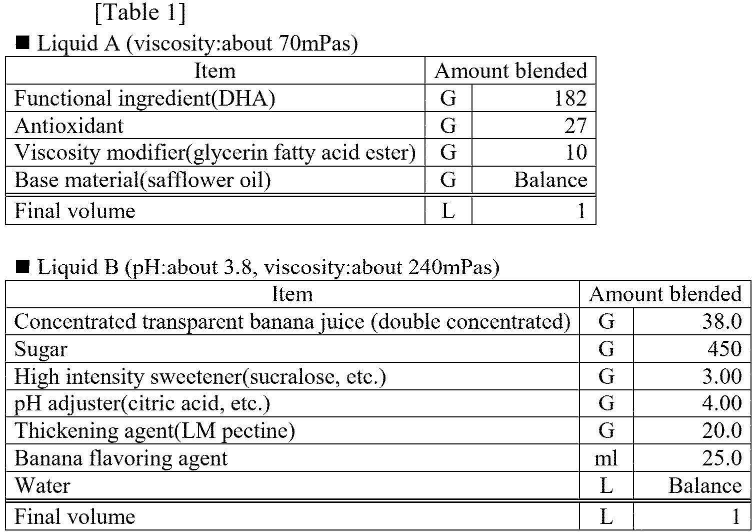

### Production Example 2: smoothie (strawberry flavored)

Liquid A and Liquid B were prepared according to the formulations shown in the following table. Liquid A was prepared by mixing functional ingredients (DHA and EPA) with other ingredients so that the total volume thereof became 1 L. DHA and EPA are each a kind of highly unsaturated fatty acid and have been reported to have the anticoagulant effect and the effect of reducing neutral fat. Liquid B was prepared by firstly adding sugar and a thickening agent (LM pectin) to water, heating and stirring the resultant at 80°C for 10 minutes, and subsequently adding the rest of ingredients so that the total volume thereof became 1 L. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of bovine milk was added thereto, followed by stirring to prepare a smoothie-like beverage (SV viscosity: about 5 mPa·s). DHA and EPA are lipid-soluble and are easily oxidized; however, when DHA and EPA were incorporated into a two liquid type packaged food product as in the present invention, it was possible to obtain a palatable beverage therefrom while suppressing deterioration of the functional ingredients.

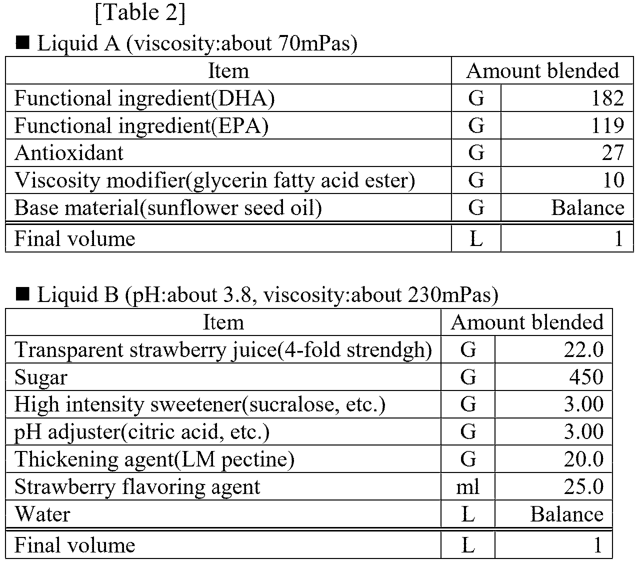

### Production Example 3: smoothie (blueberry flavored)

Liquid A and Liquid B were prepared according to the formulations shown in the following table. Liquid A was prepared by mixing a functional ingredient (bifidobacteria) with other ingredients so that the total volume thereof became 1 L. Bifidobacteria are a kind of lactic acid bacteria and have been reported to serve as beneficial bacteria and have an intestinal regulation effect. Liquid B was prepared by firstly adding sugar and a thickening agent (LM pectin) to water, heating and stirring the resultant at 80°C for 10 minutes, and subsequently adding the rest of ingredients so that the total volume thereof became 1 L. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of bovine milk was added thereto, followed by stirring to prepare a smoothie-like beverage (SV viscosity: about 5 mPa·s). Bifidobacteria are generally unstable to heat and oxygen; however, when bifidobacteria were incorporated into a two liquid type packaged food product as in the present invention, it was possible to obtain a palatable food product therefrom while suppressing deterioration of the functional ingredient.

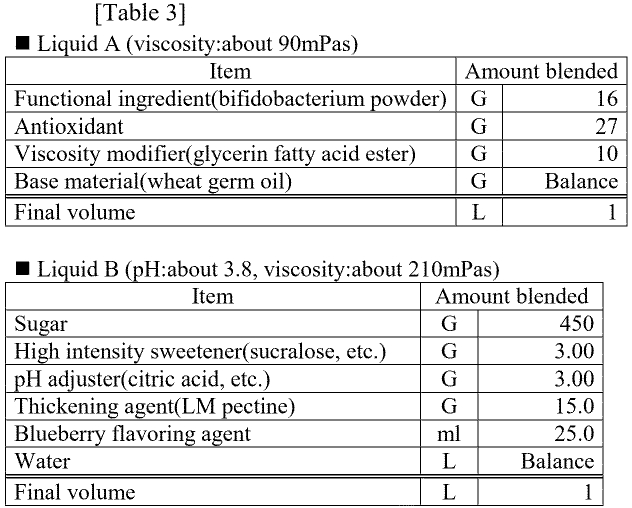

### Production Example 4: smoothie (grape flavored)

Liquid A and Liquid B were prepared according to the formulations shown in the following table. Liquid A was prepared by mixing iron (ferric pyrophosphate), which is a functional ingredient prone to insufficient intake, with other ingredients so that the total volume thereof became 1 L. Liquid B was prepared by firstly adding sugar and a thickening agent (HM pectin) to water, heating and stirring the resultant at 80°C for 10 minutes, and subsequently adding the rest of ingredients so that the total volume thereof became 1 L. Liquid A was not sterilized and liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of bovine milk was added thereto, followed by stirring to prepare a smoothie-like beverage (SV viscosity: about 5 mPa·s). Ferric pyrophosphate is generally hardly dissolved in water and is likely to generate precipitate together with polyphenol in a fruit juice; however, when ferric pyrophosphate was incorporated into a two liquid type packaged food product as in the present invention, it was possible to obtain a palatable food product therefrom while suppressing precipitation of the functional ingredient.

**[Table 4]**

| ■ Liquid A (viscosity:about 90mPas) | | |
|---|---|---|
| Item | Amount blended | |
| Functional ingredient(ferric pyrophosphate) | G | 6 |
| Antioxidant | G | 27 |
| Viscosity modifier(glycerin fatty acid ester) | G | 10 |
| Base material(wheat germ oil) | G | Balance |
| Final volume | L | 1 |

| ■ Liquid B (pH: about 3.8, viscosity:about 230mPas) | | |
|---|---|---|
| Item | Amount blended | |
| Turbid grape juice(6-fold strength) | G | 15.0 |
| Sugar | G | 450 |
| High intensity sweetener(sucralose, etc.) | G | 3.00 |
| pH adjuster(citric acid, etc.) | G | 3.00 |
| Thickening agent(HM pectine) | G | 20.0 |
| Grape flavoring agent | ml | 25.0 |
| Water | L | Balance |
| Final volume | L | 1 |

### Production Example 5: smoothie (black sesame flavored)

Liquid A and Liquid B were prepared according to the formulations shown in the following table. Liquid A was prepared by mixing calcium (calcium chloride), which is a functional ingredient prone to insufficient intake, with other ingredients so that the total volume thereof became 1 L. Liquid B was prepared by firstly adding sugar and a thickening agent (HM pectin) to water, heating and stirring the resultant at 80°C for 10 minutes, and subsequently adding the rest of ingredients so that the total volume thereof became 1 L. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of bovine milk was added thereto, followed by stirring to prepare a smoothie-like beverage (SV viscosity: about 7 mPa·s). Calcium is likely to react with a thickening agent such as pectine in general; however, when calcium was incorporated into a two liquid type packaged food product as in the present invention, it was possible to obtain a palatable food product therefrom while suppressing precipitation of the functional ingredient.

**[Table 5]**

| ■ Liquid A (viscosity:about 90mPas) | | |
|---|---|---|
| Item | Amount blended | |
| Functional ingredient(calcium chloride) | G | 6 |
| Antioxidant | G | 27 |
| Viscosity modifier(glycerin fatty acid ester) | G | 10 |
| Base material(wheat germ oil) | G | Balance |
| Final volume | L | 1 |

| ■ Liquid B (pH:about 3.8, viscosity:about 210mPas) | | |
|---|---|---|
| Item | Amount blended | |
| Sugar | G | 450 |
| High intensity sweetener(sucralose, etc.) | G | 3.00 |
| pH adjuster(citric acid, etc.) | G | 3.00 |
| Thickening agent(HM pectine) | G | 20.0 |
| Black sesame flavoring agent | ml | 25.0 |
| Water | L | Balance |
| Final volume | L | 1 |

### Production Example 6: smoothie (grape flavored)

Liquid A and Liquid B were prepared according to the formulations shown in the following table. Liquid A was prepared by mixing a functional ingredient (anthocyanin) with other ingredients so that the total volume thereof became 1 L. Anthocyanin is an antioxidative substance derived from a plant and has been reported to have the effect of relieving eyestrain. Liquid B was prepared by firstly adding sugar and a thickening agent (LM pectin) to water, heating and stirring the resultant at 80°C for 10 minutes, and subsequently adding the rest of ingredients so that the total volume thereof became 1 L. Liquid A and Liquid B were each sterilized at 93°C for 30 seconds, and then two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of bovine milk was added thereto, followed by stirring to prepare a smoothie-like beverage (SV viscosity: about 5 mPa·s). Anthocyanin is generally unstable in a neutral state; however, when anthocyanin was incorporated into a two liquid type packaged food product as in the present invention, it was possible to obtain a palatable food product therefrom while suppressing precipitation of the functional ingredient.

In addition, a liquid food product packaged in a container was produced in the same manner as described above, except that Liquid A was not heat-sterilized before filling it into the resin container, and that only Liquid B was heat-sterilized (production example 6b). Advantages considered to be provided when Liquid A is not heat-sterilized are as follows: deterioration in stability due to sterilization is prevented and the color derived from anthocyanin can be prevented from changing, as compared with the case where Liquid A is heat-sterilized.

**[Table 6]**

| ■ Liquid A (pH:about 2.2, viscosity:about 20mPas, Bx:about 88) | | |
|---|---|---|
| Item | Amount blended | |
| Functional ingredient(anthocyanin) | G | 16 |
| Sugar | G | 850 |
| pH adjuster(75% phosphoric acid solution) | L | 3 |
| Base material(water) | L | Balance |
| Final volume | L | 1 |

| ■ Liquid B (pH:about 3.8, viscosity:about 230mPas, Bx:about 66) | | |
|---|---|---|
| Item | Amount blended | |
| Turbid grape juice(6-fold strength) | G | 15.0 |
| Sugar | G | 450 |
| High intensity sweetener(sucralose, etc.) | G | 3.00 |
| pH adjuster(citric acid, etc.) | G | 3.00 |
| Thickening agent(LM pectine) | G | 20.0 |
| Grape flavoring agent | ml | 25.0 |
| Water | L | Balance |
| Final volume | L | 1 |

### Production Example 7: beverage (yogurt flavored)

Liquid A and Liquid B were prepared according to the formulations shown in the following table. Liquid A was prepared by mixing a functional ingredient (lactic acid bacteria), which has been reported to have an intestinal regulation effect, with other ingredients so that the total volume thereof became 1 L. Liquid B was prepared by firstly adding sugar and a thickening agent (carrageenan) to water, heating and stirring the resultant at 80°C for 10 minutes, and subsequently adding the rest of ingredients so that the total volume thereof became 1 L. Liquid A and Liquid B were each sterilized at 93°C for 30 seconds, and then two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of water was added thereto, followed by stirring to prepare a yogurt-flavored beverage (SV viscosity: about 2 mPa·s). Lactic acid bacteria are generally unstable to heat and oxygen; however, when lactic acid bacteria were incorporated into a two liquid type packaged food product as in the present invention, it was possible to obtain a palatable food product therefrom while suppressing deterioration of the functional ingredient.

In addition, a liquid food product packaged in a container was produced in the same manner as described above, except that Liquid A was not heat-sterilized before filling it into the resin container, and that only Liquid B was heat-sterilized (production example 7b). Advantages considered to be provided when Liquid A is not heat-sterilized are as follows: decrease in activity of lactic acid bacteria due to sterilization can be prevented as compared with the case where Liquid A is heat-sterilized.

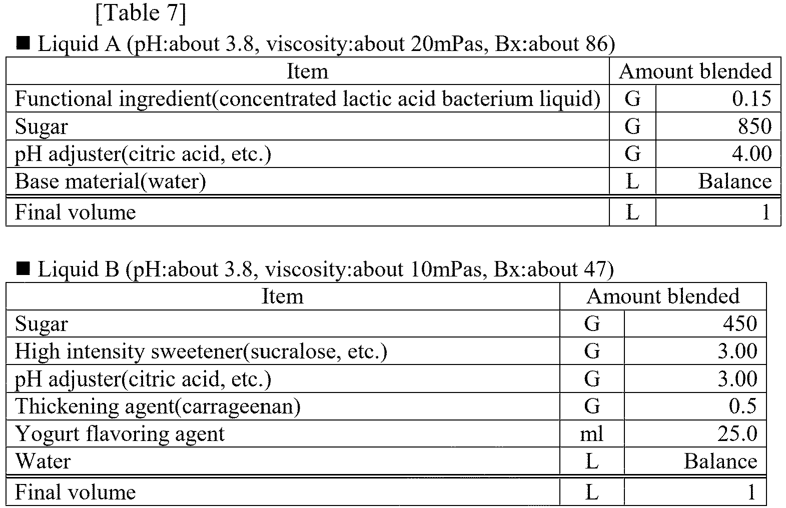

### Production Example 8: carbonated beverage (grape flavored)

Liquid A and Liquid B were prepared according to the formulations shown in the following table. Liquid A was prepared by mixing a functional ingredient (anthocyanin) with other ingredients so that the total volume thereof became 1 L. Anthocyanin is an antioxidative substance derived from a plant and has been reported to have the effect of relieving eyestrain. Liquid B was prepared by firstly adding sugar and a thickening agent (carrageenan) to water, heating and stirring the resultant at 80°C for 10 minutes, and subsequently adding the rest of ingredients so that the total volume thereof became 1 L. Liquid A and Liquid B were each sterilized at 93°C for 30 seconds, and then two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of carbonated water was added thereto, followed by stirring to prepare a grape-flavored carbonated beverage. Anthocyanin is generally unstable in a neutral state; however, when anthocyanin was incorporated into a two liquid type packaged food product as in the present invention, it was possible to obtain a palatable food product therefrom while suppressing precipitation of the functional ingredient.

In addition, a liquid food product packaged in a container was produced in the same manner as described above, except that Liquid A was not heat-sterilized before filling it into the resin container, and that only Liquid B was heat-sterilized (production example 8b). Advantages considered to be provided when Liquid A is not heat-sterilized are as follows: deterioration in stability due to sterilization is prevented and the color derived from anthocyanin can be prevented from changing as compared with the case where Liquid A is heat-sterilized.

**[Table 8]**

| ■ Liquid A (pH:about 2.2, viscosity:about 20mPas, Bx:about 87) | | |
|---|---|---|
| Item | Amount blended | |
| Functional ingredient(anthocyanin) | G | 16 |
| Sugar | G | 850 |
| pH adjuster(75% phosphoric acid solution) | L | 3 |
| Base material(water) | L | Balance |
| Final volume | L | 1 |

| ■ Liquid B (pH:about 3.8, viscosity:about 10mPas, Bx:about 49) | | |
|---|---|---|
| Item | Amount blended | |
| Turbid grape juice(6-fold strength) | G | 15.0 |
| Sugar | G | 450 |
| High intensity sweetener(sucralose, etc.) | G | 3.00 |
| pH adjuster(citric acid, etc.) | G | 3.00 |
| Thickening agent(carrageenan) | G | 0.5 |
| Grape flavoring agent | ml | 25.0 |
| Water | L | Balance |
| Final volume | L | 1 |

### Production Example 9: edible sauce (strawberry flavored)

Liquid A and Liquid B were prepared according to the formulations shown in the following table. Liquid A was prepared by mixing functional ingredients (DHA and EPA) with other ingredients so that the total volume thereof became 1 L. DHA and EPA are each a kind of highly unsaturated fatty acid and have been reported to have the anticoagulant effect and the effect of reducing neutral fat. Liquid B was prepared by firstly adding sugar and a thickening agent (HM pectin) to water, heating and stirring the resultant at 80°C for 10 minutes, and subsequently adding the rest of ingredients so that the total volume thereof became 1 L. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and poured on 200 mL of yogurt to use as an edible sauce. DHA and EPA are lipid-soluble and are easily oxidized; however, when DHA and EPA were incorporated into a two liquid type packaged food product as in the present invention, it was possible to obtain a palatable food product while suppressing deterioration of the functional ingredient.

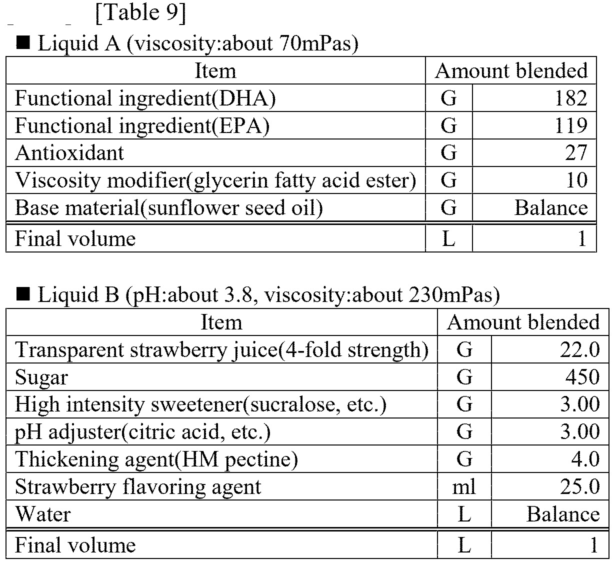

### Production Example 10: edible sauce (blueberry flavored)

Liquid A and Liquid B were prepared according to the formulations shown in the following table. Liquid A was prepared by mixing a functional ingredient (bifidobacteria) with other ingredients so that the total volume thereof became 1 L. Bifidobacteria are a kind of lactic acid bacteria and have been reported to serve as beneficial bacteria and have an intestinal regulation effect. Liquid B was prepared by firstly adding sugar and a thickening agent (HM pectin) to water, heating and stirring the resultant at 80°C for 10 minutes, and subsequently adding the rest of ingredients so that the total volume thereof became 1 L. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and poured on a pancake to use as an edible sauce. Bifidobacteria are generally unstable to heat and oxygen however, when bifidobacteria were incorporated into a two liquid type packaged food product as in the present invention, it was possible to obtain a palatable food product while suppressing deterioration of the functional ingredient.

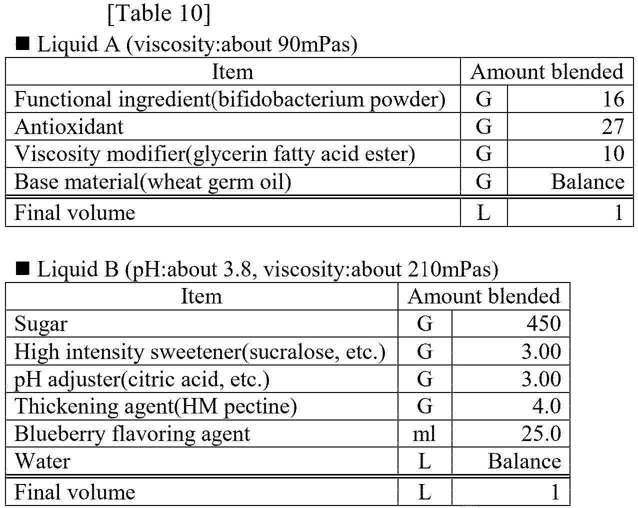

### Production Example 11: smoothie (sesame and toasted soybean flour flavored)

Liquid A and Liquid B were prepared according to the formulations shown in the following table. Liquid A was prepared by mixing a lipid-soluble functional ingredient (sesamin) with other ingredients so that the total volume thereof became 1 L. Liquid B was prepared by firstly adding sugar and a thickening agent to water, heating and stirring the resultant at 80°C for 10 minutes, and subsequently adding the rest of ingredients so that the total volume thereof became 1 L. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of bovine milk was added thereto, followed by stirring to prepare a smoothie-like beverage (SV viscosity: about 5 mPa·s). When a functional ingredient was incorporated into a two liquid type packaged food product as in the present invention, it was possible to obtain a palatable beverage therefrom while suppressing deterioration of the functional ingredient.

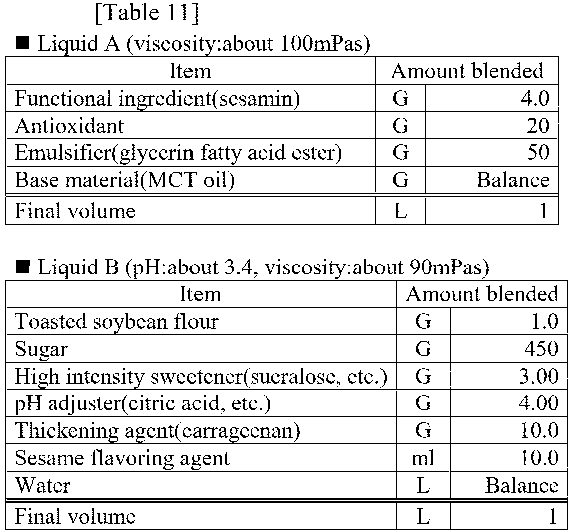

### Production Example 12: smoothie (strawberry flavored)

Liquid A and Liquid B were prepared according to the formulations shown in the following table. Liquid A was prepared by mixing lipid-soluble functional ingredients (vitamin D and vitamin E) with other ingredients so that the total volume thereof became 1 L. Liquid B was prepared by firstly adding sugar to water, heating and stirring the resultant at 80°C for 10 minutes, and subsequently adding the rest of ingredients so that the total volume thereof became 1 L. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and put into a cup, and 120 mL of bovine milk was added thereto, followed by stirring to prepare a smoothie-like beverage (SV viscosity: about 5 mPa·s). When functional ingredients were incorporated into a two liquid type packaged food product as in the present invention, it was possible to obtain a palatable beverage therefrom while suppressing deterioration of the functional ingredients.

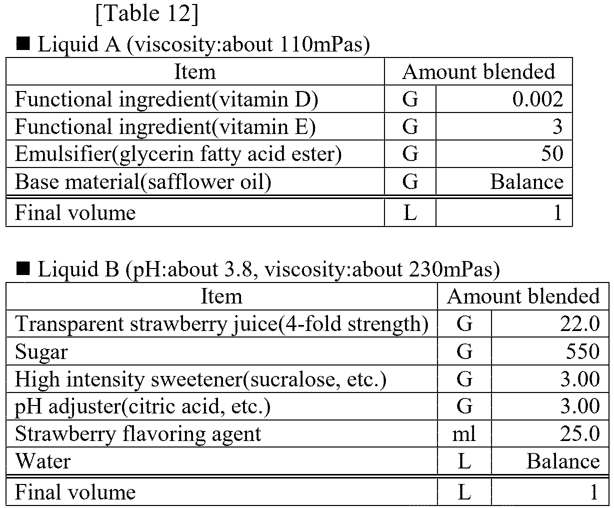

### Production Example 13: edible sauce (strawberry flavored)

Liquid A and Liquid B were prepared according to the formulations shown in the following table. Liquid A was prepared by mixing a lipid-soluble functional ingredient (sesamin) with other ingredients so that the total volume thereof became 1 L. Commercially available strawberry jam (containing pectin) was used as Liquid B. Liquid A was not sterilized and Liquid B was sterilized at 93°C for 30 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and poured on 200 mL of yogurt to use as an edible sauce. When a functional ingredient was incorporated into a two liquid type packaged food product as in the present invention, it was possible to obtain a palatable food product therefrom while suppressing deterioration of the functional ingredient.

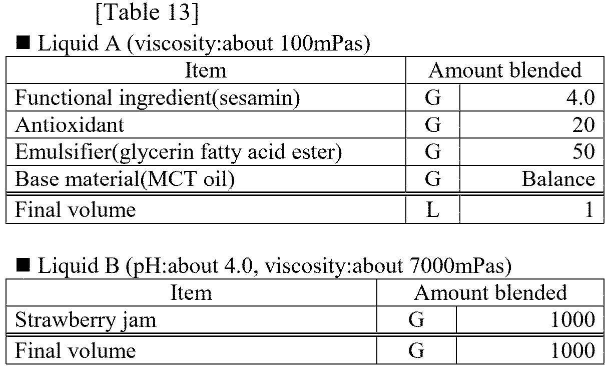

### Production Example 14: hot milk beverage (honey flavored)

Liquid A and Liquid B were prepared according to the formulations shown in the following table. Liquid A was prepared by mixing lipid-soluble functional ingredients (vitamin D and vitamin E) with an edible oil (oleogel mozelsoft TL manufactured by ADEKA CORPORATION) as a base material so that the total volume thereof became 1 L. Commercially available honey was used as Liquid B. Liquid A was not sterilized and Liquid B was sterilized at 140°C for 5 seconds. Then, two liquid chambers of a resin container (the distance between the opening portions of the respective liquid chambers was 1 cm) were filled with 3 mL of Liquid A and 10 mL of Liquid B, respectively, and sealed to produce a single-use liquid food product packaged in the container.

The produced food product packaged in the container was opened in one action and mixed with bovine milk heated to 60°C to prepare a beverage. When functional ingredients were incorporated into a two liquid type packaged food product as in the present invention, it was possible to obtain a palatable beverage therefrom while suppressing deterioration of the functional ingredient.

**[Table 14]**

| ■ Liquid A (viscosity:about 7700mPas) | | |
|---|---|---|
| Item | Amount blended | |
| Functional ingredient(vitamin D) | G | 0.002 |
| Functional ingredient(vitamin E) | G | 3 |
| Base material(oleogel) | G | Balance |
| Final volume | L | 1 |

| ■ Liquid B (pH:about 4.0, viscosity:about 14000mPas) | | |
|---|---|---|
| Item | Amount blended | |
| Honey | G | 1000 |
| Final volume | G | 1000 |

## Claims

1. A liquid food product packaged in a container, wherein
(a) a liquid composition including a functional ingredient and
(b) a liquid composition different from the liquid composition (a) are individually packaged.

2. The food product according to claim 1, wherein the liquid composition (a) is not heat-sterilized.

3. The food product according to claim 1 or 2, wherein the liquid composition (b) contains a thickening agent.

4. The food product according to any of claims 1 to 3, wherein the liquid composition (b) has a viscosity of 5 to 400 mPa·s.

5. The food product according to any of claims 1 to 4, wherein the container includes at least two or more liquid chambers for holding the liquid compositions (a) and (b).

6. The food product according to any of claims 1 to 5, wherein the container allows the liquid compositions (a) and (b) to be simultaneously released from the container.

7. The food product according to any of claims 1 to 6, wherein the liquid composition (a) includes 40% by weight or more of an oil.

8. The food product according to any of claims 1 to 7, wherein the functional ingredient is lipid-soluble, and the liquid composition (a) includes 40% by weight or more of an oil.

9. The food product according to any of claims 1 to 8, wherein the liquid composition (a) includes 75% by weight or more of an oil.

10. The food product according to any of claims 1 to 9, wherein the liquid composition (b) includes a flavoring agent and/or a fruit juice.

11. The food product according to any of claims 1 to 10, wherein the food product is a beverage.

12. The food product according to any of claims 1 to 11, wherein the food product is a concentrated beverage to be diluted before drunk.

13. The food product according to any of claims 1 to 12, wherein the food product is a single-use product.

14. A method for producing the liquid food product packaged in a container according to any of claims 1 to 13, the method comprising the step of filling the liquid composition (a) and the liquid composition (b) individually in different liquid chambers, respectively.

15. The method according to claim 14, wherein the liquid composition (a) is not heat-sterilized or is heat-sterilized at a temperature of 100°C or lower.
